# EUROPEAN PATENT SPECIFICATION

(11) **EP 0 546 225 B1**
(45) Date of publication and mention of the grant of the patent: **23.10.1996**
(21) Application number: 91311584.6
(22) Date of filing: 12.12.1991
(51) Int. Cl.: B23H 9/12, B29C 33/38

(54) **Tool making**
Form-Herstellung
Fabrication de moule

(43) Date of publication of application: 16.06.1993
(73) Proprietor: NISSAN EUROPEAN TECHNOLOGY CENTRE LIMITED, Sunderland, Tyne & Wear SR5 3ND (GB)
(72) Inventor: Puddephatt, Kevin James, Nr.Olney, Buckinghamshire, MK46 4JE (GB)
(74) Representative: Godwin, Edgar James

(56) References cited:
- EP-A- 0 295 264
- GB-A- 2 205 513
- PATENT ABSTRACTS OF JAPAN vol. 10, no. 126 (M-477)(2183) 10 May 1986 & JP-A-60 255 233 (ENSHIYUU CLOTH KK).

## Description

This invention relates to the making of forming tools, in particular injection moulding tools such as are used to define one or more surfaces of a cavity for moulding a part made of plastics material, e.g. a trim or body part to be used in a motor vehicle.

The term "forming tools" is intended to include, without limitation, injection moulding, blow moulding, press, hot press, and die casting tools.

In this specification the following abbreviations are used:
- CAD: : computer aided design;
- NC: : numerical control or numerically controlled, according to context;
- EDM: : electrical discharge machining.

One known method of making an injection moulding tool is by NC machining from a rectangular block of material. The desired shape may be obtained exclusively by NC machining or in combination with EDM, using either a wire or die sinking electrode for the final surface finish. However, for relatively large injection moulding tools, such as used to mould vehicle impact bumpers, the production process can take several months to provide a finished tool.

Another known method is to machine the tool from a rectangular block of material, using conventional EDM techniques, which is an extremely time consuming and expensive procedure, often requiring several weeks of continuous EDM machining to achieve the desired shape with the attendant high production costs.

GB-A-1 211 190 discloses a method of making a steel embossing die in which three graphite electrodes having operative surfaces of different shapes are used in succession for electrical discharge machining of a steel blank which has previously been hardened and around to shape and size. Machining with the first graphite electrode is done at a high power rate and in the usual manner for EDM. The use of a high power rate is stated to save time and electrode wear. Only the third graphite electrode has an operative surface whose shape is complementary to that of the embossing die. The process remains time consuming and expensive.

The present invention provides a method of making forming tools having an operative surface of a predetermined shape, comprising the sequential steps of (a) subjecting a first tool blank to comparatively rapid EDM using a first electrode having an operative surface whose shape is complementary to the said predetermined shape and which is spaced from the tool blank by a comparatively large first EDM gap, thereby to produce a first tool having a coarse surface whose shape approximates to the said predetermined shape; (b) subjecting the first tool to comparatively slow EDM using a second electrode having an operative surface whose shape is complementary to the said predetermined shape and which is spaced from the said tool by a comparatively small second EDM gap, thereby to produce a trial tool having an operative surface whose shape is complementary to that of the second electrode; and after the trial tool has been used to make a trial part, the trial part has been proved, and, if necessary, the said predetermined shape has been modified, the further sequential steps of (c) subjecting a second tool blank to comparatively rapid EDM using the said second electrode, which is spaced from the said tool blank by a comparatively large EDM gap, thereby to produce a second tool having a coarse surface whose shape approximates to the said predetermined shape; and (d) subjecting the second tool to comparatively slow EDM using a third electrode having an operative surface whose shape is complementary to the said predetermined shape and which is spaced from the said tool by a comparatively small EDM gap, thereby to produce a production tool having an operative surface whose shape is complementary to that of the third electrode.

Preferably, each tool blank is cast, and NC data derived from a tool design may be used for NC machining of a casting model and the electrodes.

The invention will be described further, by way of example only, with reference to the accompanying drawings, in which:
Figure 1 is a flow chart of a preferred procedure for making a trial tool and, subsequently, a production tool on the basis of CAD data defining the shape of a part to be manufactured by injection moulding; and
Figures 2 to 6 are diagrammatic cross-sections illustrating various successive stages in the making of a casting mould for casting a pair of male and female injection moulding tool blanks;
Figures 7a and 7b are diagrammatic cross-sections illustrating the surface condition of workpieces after rapid and slow EDM respectively; and
Figure 8 is a diagram illustrating comparative tests of EDM.

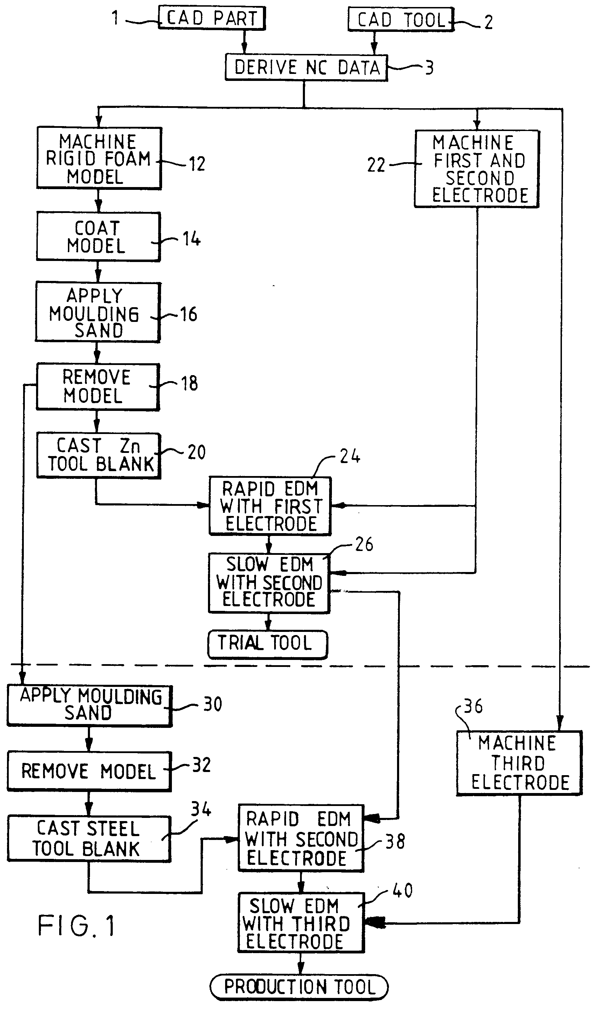

In the procedure illustrated in Figure 1 a trim part is designed, using CAD, at step 1, and a corresponding injection moulding tool is designed, using CAD, at step 2.

At step 3 NC data is derived from the CAD data defining the surface shape of either the part or the tool.

At step 12 a body of rigid plastics foam, in particular a virtually non-deformable high density rigid foam, such as polyurethane resin foam available from CIBA GEIGY under specification No. XB 5120, is subjected to NC machining in accordance with the NC data from step 3, in order to form a casting model. The density of the foam is at least 0.25 g/cm³ (e.g. 0.25 to 1.1 g/cm³); its compressive strength is at least about 4 N/mm² (e.g. 4 to 30 N/mm²).

As will be apparent from the following description, the casting model is to be used to produce a mould body which, in turn, is used to produce a cast tool preform. The production of a tool from a cast preform minimises production costs because, with accurate control of the casting process, subsequent machining to provide the finished tool can be kept to a minimum.

At step 14 a settable flowable material is applied to the machined surface of the model. The flowable material sets to form a solid coating which can be smoothed if necessary by sanding and which blocks the pores which remain exposed after the machining of the foam body. A suitable material is plaster of Paris, paint, or a curable resin (e.g. an epoxy or car body resin). A plaster or resin coating may additionally be coated with a varnish or paint. The coating is supported by the foam body and can therefore be thin and need not be self-supporting.

At step 16 moulding sand of a flowable consistency, e.g. a slurry or a sand/resin mixture, is rammed against the coated surface of the casting model in a frame, in order to form a mould body conforming to the coated surface. As will be realised from the following description, the preferred material for the forming tool is zinc alloy in view of its advantageous machining properties. However, zinc alloy is a relatively heavy material and it is important, therefore, for the mould body to withstand the zinc alloy without fracturing, both during the actual casting step and during cooling of the cast material. For this reason high density ramming of the sand/resin mixture is performed using, for example, pneumatic ramming tools, e.g. operating at a pressure of about 80 p.s.i. (0.55 MPa), in order to ensure sufficient compaction of the sand/resin mixture to provide the required strength in the mould body. Hence, a high density rigid foam is chosen to produce the casting model, as it is able to withstand the ramming step without consequential deformation or compaction, as would be apparent if usual casting model foams of relatively low density, such as STYROFOAM (trade mark), were used.

At step 18 the casting model is removed from the mould body. Removal is facilitated by the smooth coating, which parts easily from the mould body and does not tend to carry away grains of sand with it. Consequently, the surface of the mould body is comparatively smooth and produces a good surface finish on the casting. Since the coating is firmly anchored in the pores of the model, the model can be re-used. Additionally, since the model is removed before a tool blank is cast in the mould, no toxic fumes are generated during casting.

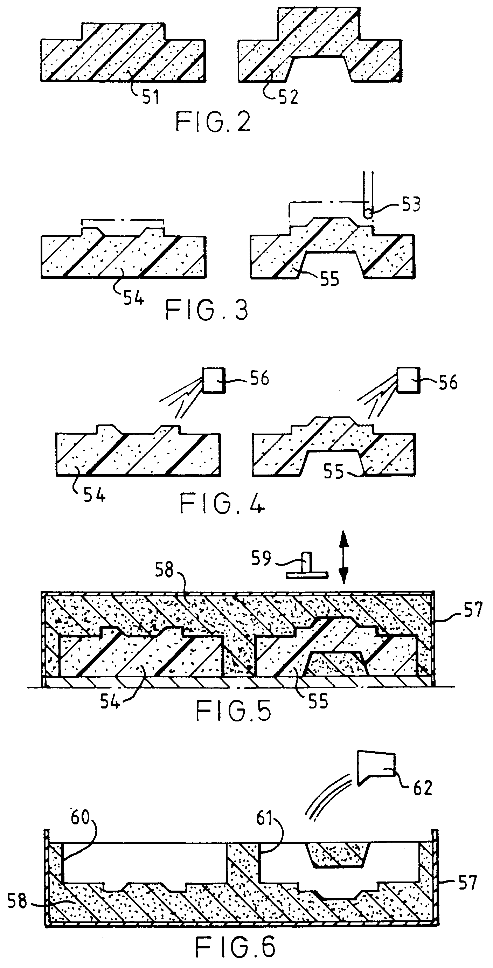

Figures 2 to 6 illustrate successive stages in the making of a casting mould for casting a female cavity tool blank and a male core tool blank which are subsequently to be machined to form a pair of injection moulding tools.

As described above, first of all, to produce casting models, a female blank block 51 and a male blank block 52 are built up from layers of rigid high density plastics foam (Fig. 2).

In Figure 3 the blocks are subjected to the NC machining (using a cutting tool 53) to form female and male blank casting models 54,55 (step 12 above). The blocks are machined so as to leave excess material (e.g. 1 to 5 mm) over the surfaces corresponding to the forming and shut faces of the injection moulding tools.

In Figure 4 settable material is applied to the models 54,55 by spray heads 56 (step 14 above).

In Figure 5 the coated models 54,55 are placed in a casting frame 57, and green sand 58 (mixed with a resin binder) is added and is compacted to a high density by a pneumatic rammer 59 (step 16 above).

The casting frame 57 is then turned over and the models 54,55 are carefully removed from the compacted sand 58 (step 18 above), leaving a female tool blank casting cavity 60 and a male tool blank casting cavity 61, into which cavities a molten metal (Zn alloy) is to be cast from a ladle 62.

The above-described model-making and casting procedure is the subject of our co-pending application filed simultaneously with the present application and entitled "Casting Process".

At step 20 a tool blank approximately to the desired shape of the tool is cast using the mould body from step 18. The blank is, advantageously, cast in a zinc alloy (Zn-Al-Pb), e.g. containing 92-98 wt.% Zn, such as that sold under the trade name KIRKSITE or KAYEM. Zinc alloy castings have an advantage in that they exhibit reduced microporosity in comparison to castings of aluminium alloy. This is thought to arise from the lead content in the material which remains fluid to a lower temperature than the other constituents and therefore flows into and fills microporous holes in the material as it is cast. Also, they can easily be recycled, and, as will be realised from the following description, it has been found that they can be machined very rapidly to a desired shape using EDM.

At step 22 the same NC data from step 3 is used in machining at least two EDM electrodes, preferably of graphite.

At step 24 a first one of the EDM electrodes is used for comparatively rapid machining of the cast tool blank (from step 20) to produce a coarse tool having a relatively coarse surface finish requiring further machining.

At step 26 a second one of the EDM electrodes is used for comparatively slow or normal machining of the coarse tool to the required dimensions.

In EDM, the upper limit of the gap between the electrode and the workpiece (usually known as the EDM gap) has been generally accepted to be 0.4 mm. If gaps above this limit are used, the surface roughness of the machined part would usually be considered unacceptable for practical use.

However, the rapid EDM in step 24 uses machine settings which provide an EDM gap above this figure. As can be understood more clearly from the subsequent description, the provision of this exceptionally wide gap produces a great improvement in EDM machining time. One of our test results shows that, when machining zinc alloy, for example, rapid EDM using a 0.68 mm gap is more than 100 times faster than normal EDM using a typical gap width of 0.073 mm.

Although the use of such an exceptionally large EDM gap results in a coarse or pitted surface which in a conventional EDM procedure would be considered damaged or unsuitable as a finished surface for an injection moulding tool, this will not be a problem under the present procedure because the rapid EDM (step 24) is only continued to a stage where the coarse surface can still be recovered to the required dimensions by slow or normal EDM (step 26).

In step 26, because the coarse tool is near to the desired dimensions, the amount of subsequent machining required by slow or normal EDM (in order to recover the coarse surface to a usable surface of the required dimensions) is reduced to a minimum. The slow EDM need only take a relatively short time and results in a surface finish which can have a very low roughness suitable for an injection moulding tool.

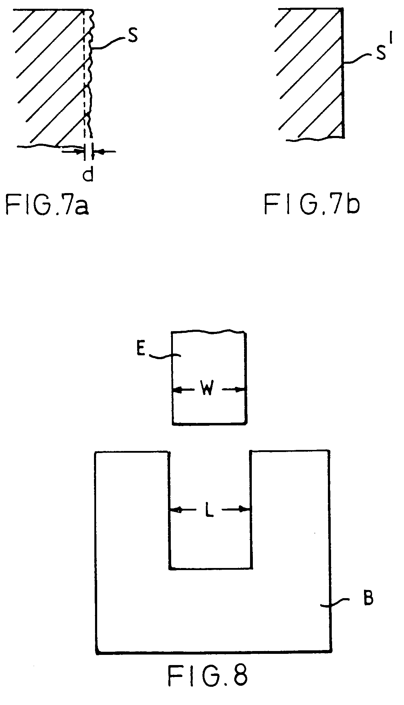

Figure 7a schematically shows the surface condition of a workpiece after rapid EDM and Figure 7b shows the surface condition of the same workpiece after slow EDM. The rapid EDM enables speedy erosion but leaves a coarse and pitted surface S, as seen in Figure 7a. This surface is cut off to a depth d (e.g. 1 mm) through slow EDM, leaving a smooth surface S' (Figure 7b) which is suitable as a finished surface for the article.

It has surprisingly been found, in particular, that if zinc alloy is used as the material for the workpiece and the EDM gap in increased beyond 0.4 mm, then rate of removal of material using rapid EDM (for approximately the same surface finish) is much improved for zinc alloy in comparison with the other materials which might be considered in making injection moulding tools (in particular aluminium alloy and steel). Tests have been carried out by machining recesses using EDM in blocks B of steel, aluminium alloy, and zinc alloy, with rectangular graphite electrodes E, as diagrammatically illustrated in Figure 8, using rapid and slow (normal) EDM, with the following results:

| | Slow EDM | | | Rapid EDM | | |
|---|---|---|---|---|---|---|
| material | Steel | Al | Zn | Steel | Al | Zn |
| duration, t | 35h04 | 11h13 | 7h56 | 1h58 | 41min | 4min |
| L, mm | 20.20 | 20.15 | 20.18 | 21.05 | 21.80 | 21.20 |
| W, mm | 20.10 | 20.10 | 20.05 | 20.10 | 20.10 | 20.10 |
| L-W, mm | 0.10 | 0.05 | 0.13 | 0.95 | 1.70 | 1.10 |
| roughness, Rₐ, µm | 3.04 | 3.43 | 4.06 | not measurable (coarse and pitted) | | |
| t(slow)/t(rapid) | 17.83 | 16.41 | 119.00. | | | |

It can be seen from these results that, when the abnormally large EDM gap is used, for zinc alloy there is an approximately eight-fold improvement in material removal when compared with aluminium alloy, a material of roughly the same hardness. It was also found that much more even sparking could be achieved with zinc alloy when compared with aluminium alloy.

In practice the actual rates of removal of material during rapid and slow EDM will also depend on the current which may be delivered by the EDM machine used. Furthermore, it has also been found that the rate of removal of material in step 24 may be approximately doubled by changing the polarity of the graphite electrode from positive to negative. Electrode wear is (as expected) dramatically increased in this case, typically by as much as 25 to 35 times, dependent on the machine settings used, which could impair the dimensional accuracy of the finished if adopted for finish machining. However, in the tool production process being described here, this increased electrode wear can be tolerated since the first electrode is used only to rough machine the tool blank and is not critical to the ultimate quality of the tool produced.

The gap between the electrode and workpiece for coarse EDM may, in the present process, be 0.5 mm or more (and only limited by machine power) whereas the gap for fine EDM may be less than 0.5 mm.

As mentioned above, irregular sparking between the electrode and workpiece occurs when machining aluminium alloy and it has been found that this irregularity increases dramatically with increase in processing speed, i.e. increase in EDM gap. As a result of this irregular sparking, unless the coarse machining is carefully controlled, it is possible to produce a surface roughness which is not recoverable by the finish EDM process. The use of zinc alloy, therefore has been found particularly advantageous as it allows the rapid EDM at the abnormally large EDM gap to be maximised, thereby minimising the relatively slow finish machining required, reducing the overall production cost.

In automotive design, for example, injection moulding is used to produce many of the exterior body parts and interior trim panels. In view of the interaction between many of these parts, as well as the size and complexity of the designs, many designs are proved for their intended use by testing. This is achieved by making trial parts using trial injection moulding tools. As the number of trial parts required is relatively small, the trial tools are usually made from a relatively soft alloy, such as aluminum alloy. Once the trial parts are proven, both aesthetically and functionally, a production tool is made to the desired final shape in a more durable material such as steel, to account for the large production runs required for the parts.

The product of step 26 is a tool which, after an optional polishing step, can be used in the trial production of injection moulded parts, i.e. a trial tool as described above. Subsequent to this trial, a production tool of steel (or another suitable material, depending upon the use of the tool, including aluminium alloy or zinc alloy) can made by the following procedure.

At step 30, moulding sand is rammed against the coated surface of the casting model (from step 18) in a frame, in order to form a mould body. At step 32 the model is removed from the mould body. At step 34 a further tool blank is cast, preferably of steel, using the mould body from step 32, and ultimately can be used as a production tool.

At step 36 a third EDM electrode, again preferably of graphite, is machined, using the same NC data (from step 3) as in steps 12 and 22 or a derivative of that data if there is a design change after the trial tooling.

At step 38 the second EDM electrode (used in step 26) is used for rapid machining of the cast steel tool blank (from step 34) to produce a coarse tool. This (second) EDM electrode has only become slightly worn during the EDM to produce the trial tool, because the EDM was slow and the processing time was relatively short. Therefore, the re-use of the second EDM electrode for rapid EDM in production tooling is feasible and economical.

At step 40 the third EDM electrode (from step 36) is used for slow final machining of the coarse tool to the required dimensions, thereby to produce the production tool.

It will be appreciated that each individual step described above may be replaced by a different step having a similar effect and that each series of two or more steps provides its own advantage (in combination) which may be independent of the preceding and following steps. In particular, advantages are provided by the following features, individually and independently:
the use of an exceptionally large electrode gap for rapid EDM and a smaller electrode gap for slow or finish EDM;
the use of reverse polarity to further enhance the removal of material by rapid EDM;
the use of two discrete electrodes of the same or similar shape for rapid and slow EDM;
the use of the same EDM machine with the same dielectric fluid (oil) for rapid and slow EDM;
the use of the second electrode (used in the production of a first tool) as the first electrode in the subsequent making of a second tool;
the use of only three electrodes in the making of a trial tool and a production tool;
subjecting a precision casting to finishing by EDM;
the use of a machined re-usable foam body as a casting model (i.e. the use of the same casting model in the production of a trial tool and a production tool), followed by EDM;
the use of a tool blank made, preferably by casting, of zinc alloy in a two-stage EDM process.

In the procedure specifically described above, the use of a number of NC machining operations and casting makes the workflow tolerant to part design change. The use of NC machining as described also reduces manpower requirements and increases NC machine utilisation. Furthermore, the use of EDM enhances surface quality and dimensional accuracy.

It will be appreciated, in particular, that in the manufacture of trial and production tools, such as are in common use in the automotive industry, minor design changes can easily be accommodated between the production of any two electrodes for use in the overall process. This is considered particularly advantageous in the design and manufacture of automotive trim and body parts, as it provides maximum flexibility in the overall design/manufacturing process at minimal cost. If a design change is required, the NC data so produced can immediately be used to modify the master or casting model and for the electrodes used in the EDM process. This flexibility may be implemented at any stage of the tool production process, for example either between the two electrodes used to produce the first or trial tool, or between the trial and production tools.

The use of NC machining to produce the casting model can also be used to prove the accuracy of the NC data to be used for the production of electrodes, before actual machining of the relatively expensive electrode materials, such as graphite. An electrode can then be produced using the said NC data or a derivative thereof.

Furthermore, although the above description refers to a number of electrodes, it should be realised that all of the electrodes, dependent on the shape of the tool required, may be fabricated from a common block of graphite, further reducing the tool production costs. The electrodes used will include a shaped portion conforming to the shape of the required part, extending from a body portion which, in effect, only serves to support the shaped portion effective in the EDM process. Hence, by selecting a graphite block of appropriate size, the first electrode, for example, when worn through the relatively coarse machining of the first tool, can be remachined, using either the original or modified NC data, to provide either the original or a similar profile (incorporating possible design changes), which can act as any or all of the subsequent electrodes. Although the overall production time may be increased slightly, the amount of graphite used is kept to a minimum.

In forming a part by injection moulding, a female cavity tool is used in conjunction with a male core tool to define the moulding cavity. The female cavity tool defines the primary surface of the part, which surface is to be exposed in use; the female cavity tool defines a generally concave moulding surface. Since the male core tool only defines the secondary surface on the injection moulded part, it can be made by conventional NC machining, and finishing is not necessary, except around the parting face.

Although a two-stage EDM process has been particularly described, it should be realised that a larger number of EDM steps can also be used. For example, two or more electrodes may be employed sequentially in either the coarse machining or the fine machining of the cast material.

## Claims

1. A method of making forming tools having an operative surface of a predetermined shape, comprising the sequential steps of
(a) subjecting a first tool blank to comparatively rapid EDM using a first electrode having an operative surface whose shape is complementary to the said predetermined shape and which is spaced from the tool blank by a comparatively large first EDM gap, thereby to produce a first tool having a coarse surface whose shape approximates to the said predetermined shape;
(b) subjecting the first tool to comparatively slow EDM using a second electrode having an operative surface whose shape is complementary to the said predetermined shape and which is spaced from the said tool by a comparatively small second EDM gap, thereby to produce a trial tool having an operative surface whose shape is complementary to that of the second electrode; and
after the trial tool has been used to make a trial part, the trial part has been proved, and, if necessary, the said predetermined shape has been modified, the further sequential steps of
(c) subjecting a second tool blank to comparatively rapid EDM using the said second electrode, which is spaced from the said tool blank by a comparatively large EDM gap, thereby to produce a second tool having a coarse surface whose shape approximates to the said predetermined shape; and
(d) subjecting the second tool to comparatively slow EDM using a third electrode having an operative surface whose shape is complementary to the said predetermined shape and which is spaced from the said tool by a comparatively small EDM gap, thereby to produce a production tool having an operative surface whose shape is complementary to that of the third electrode.

2. A method as claimed in claim 1, in which the large EDM gap is at least 0.5 mm and the small EDM gap is less than 0.5 mm.

3. A method as claimed in claim 1 or 2, in which the first electrode is of negative polarity in step (a) and the second electrode is of positive polarity in step (b).

4. A method as claimed in any preceding claim, in which the second electrode is of negative polarity in step (c) and the third electrode is of positive polarity in step (d).

5. A method as claimed in any preceding claim, in which the first tool blank is of zinc alloy.

6. A method as claimed in any preceding claim, in which the second tool blank is of steel or is of zinc alloy or aluminium alloy.

7. A method as claimed in any preceding claim, in which the first tool blank comprises a casting having a surface whose shape approximates to the said predetermined shape.

8. A method as claimed in claim 7, in which the first tool blank is produced by a process comprising making a casting model by machining a rigid foam body so as to form a machined surface whose shape approximates to the said predetermined shape, forming a mould body against the casting model, and using the mould body to cast the tool blank.

9. A method as claimed in claim 8, including applying to the machined surface a flowable material, e.g. plaster of Paris, paint, or a resin, which sets to form a solid coating blocking the pores of the machined surface.

10. A method as claimed in claim 8 or 9, in which the casting model body is produced by NC machining using predetermined NC data derived from the said predetermined shape.

11. A method as claimed in claim 10, in which at least one of the electrodes is produced by NC machining using the said predetermined NC data or a derivative thereof.

12. A method as claimed in any of claims 8 to 11, in which the second tool blank is produced by casting using the said casting model.

13. A method as claimed in any preceding claim, in which the tools are injection moulding tools.

14. A method as claimed in any preceding claim, in which at least one of the electrodes is of graphite.

15. A method as claimed in any preceding claim, in which the second electrode is produced from data which is modified from data used to produce the first electrode.

16. A method as claimed in any preceding claim, in which the third electrode is produced from data which is modified from the data used to produce the second electrode.

## Patentansprüche

1. Verfahren zur Herstellung von Formungswerkzeugen, die eine wirksame Oberfläche von einer festgelegten Form haben, welches die folgenden nacheinander auszuführenden Schritte aufweist:
(a) Unterziehen eines ersten Werkzeugrohlings einer vergleichsweise schnellen elektro-erosiven Bearbeitung (EDM) unter Verwendung einer ersten Elektrode, die eine wirksame Oberfläche hat, deren Form komplementär zu der festgelegten Form ist und die mit einem vergleichsweise großen ersten Funkenerosionsspalt im Abstand zu dem Werkzeugrohling gehalten wird, um dadurch ein erstes Werkzeug zu schaffen, das eine Groboberfläche hat, deren Form derjenigen der festgelegten Form angenähert ist;
(b) Unterziehen des ersten Werkzeugs einer vergleichsweise langsamen elektro-erosiven Bearbeitung unter Verwendung einer zweiten Elektrode, die eine wirksame Oberfläche hat, deren Form komplementär zu der festgelegten Form ist und die mit einem vergleichsweise geringen zweiten Funkenerosionsspalt im Abstand zu dem Werkzeug gehalten wird, um dadurch ein Probe-Werkzeug zu schaffen, das eine wirksame Oberfläche hat, deren Form derjenigen der zweiten Elektrode komplementär ist; und
nachdem das Probe-Werkzeug eingesetzt worden ist, um ein Probeteil herzustellen, das Probeteil bestätigt worden ist und, falls erforderlich, die festgelegte Form modifiziert worden ist, die weiteren nacheinander auszuführenden Schritte:
(c) Unterziehen eines zweiten Werkzeugrohlings einer vergleichsweise schnellen elektro-erosiven Bearbeitung unter Verwendung der zweiten Elektrode, die mit einem vergleichsweise großen Funkenerosionsspalt im Abstand zu dem Werkzeugrohling gehalten wird, um dadurch ein zweites Werkzeug zu schaffen, das eine Groboberfläche hat, deren Form derjenigen der festgelegten Form angenähert ist; und
(d) Unterziehen des zweiten Werkzeugs einer vergleichsweise langsamen elektro-erosiven Bearbeitung unter Verwendung einer dritten Elektrode, die eine wirksame Oberfläche hat, deren Form komplementär zu der festgelegten Form ist und die mit einem vergleichsweise geringen Funkenerosionsspalt im Abstand zu dem Werkzeug gehalten wird, um dadurch ein Produktionswerkzeug zu schaffen, das eine wirksame Oberfläche hat, deren Form derjenigen der dritten Elektrode komplementär ist.

2. Verfahren nach Anspruch 1, bei dem der große Funkenerosionsspalt wenigstens 0,5 mm beträgt und der geringe Funkenerosionsspalt kleiner als 0,5 mm ist.

3. Verfahren nach Anspruch 1 oder 2, bei dem die erste Elektrode im Schritt (a) eine negative Polarität hat und die zweite Elektrode im Schritt (b) eine positive Polarität hat.

4. Verfahren nach einem der vorhergehenden Ansprüche, bei dem die zweite Elektrode im Schritt (c) eine negative Polarität hat und die dritte Elektrode im Schritt (d) eine positive Polarität hat.

5. Verfahren nach einem der vorhergehenden Ansprüche, bei dem der erste Werkzeugrohling aus einer Zinklegierung besteht.

6. Verfahren nach einem der vorhergehenden Ansprüche, bei dem der zweite Werkzeugrohling aus Stahl ist oder aus einer Zinklegierung oder einer Aluminiumlegierung besteht.

7. Verfahren nach einem der vornergehenden Ansprüche, bei dem der erste Werkzeugrohling ein Gußteil umfaßt, das eine Oberfläche hat, deren Form derjenigen der festgelegten Form angenähert ist.

8. Verfahren nach Anspruch 7, bei dem der erste Werkzeugrohling nach einer Methode hergestellt wird, welche die folgenden Schritte umfaßt: Herstellung eines Gußmodells durch maschinelle Bearbeitung eines Körpers aus festem Schaumstoff, um so eine bearbeitete Fläche zu bilden, deren Form derjenigen der festgelegten Form angenähert ist, Bildung eines Formkörpers anhand des Gußmodells und Verwendung des Formkörpers zum Gießen des Werkzeugrohlings.

9. Verfahren nach Anspruch 8, das die Aufbringung eines fließfähigen Materials, z. B. von Modell-Gips. Anstrich oder eines Harzes, auf die bearbeitete Fläche einschließt, welches abbindet, um einen festen Überzug zu bilden, der die Poren der bearbeiteten Fläche blockiert.

10. Verfahren nach Anspruch 8 oder 9, bei dem der Körper des Gußmodells durch numerisch gesteuerte (NC) Bearbeitung unter Verwendung von festgelegten Daten der numerischen Steuerung erzeugt wird, die von der festgelegten Form abgeleitet worden sind.

11. Verfahren nach Anspruch 10, bei dem wenigstens eine der Elektroden durch numerisch gesteuerte Bearbeitung unter Verwendung der festgelegten Daten der numerischen Steuerung oder einer Ableitung derselben erzeugt wird.

12. Verfahren nach einem der Ansprüche 8 bis 11, bei dem der zweite Werkzeugrohling durch Gießen unter Verwendung des Gußmodells hergestellt wird.

13. Verfahren nach einem der vorhergehenden Ansprüche, bei dem die Werkzeuge Spritzguß-Werkzeuge sind.

14. Verfahren nach einem der vorhergehenden Ansprüche, bei dem wenigstens eine der Elektroden aus Graphit ist.

15. Verfahren nach einem der vorhergehenden Ansprüche, bei dem die zweite Elektrode auf der Grundlage von Daten produziert wird, die gegenüber den Daten, die für die Herstellung der ersten Elektrode eingesetzt worden sind, modifiziert ist.

16. Verfahren nach einem der vorhergehenden Ansprüche, bei dem die dritte Elektrode auf der Grundlage von Daten produziert wird, die gegenüber den Daten, die für die Herstellung der zweiten Elektrode eingesetzt worden sind, modifiziert ist.

## Revendications

1. Procédé de production d'outils de façonnage ayant une surface fonctionnelle d'une forme prédéterminée, comprenant les étapes séquentielles ci-dessous:
(a) exposition d'une première ébauche d'outil à un usinage par décharge électrique (EDM) comparativement rapide utilisant une première électrode avec une surface fonctionnelle dont la forme est complémentaire de ladite forme prédéterminée et qui est espacée de l'ébauche d'outil d'un premier espace d'usinage par décharge électrique comparativement grand, pour produire ainsi un premier outil ayant une surface grossière dont la forme se rapproche de ladite forme prédéterminée;
(b) exposition du premier outil à un usinage par décharge électrique comparativement lent en utilisant une deuxième électrode avec une surface fonctionnelle dont la forme est complémentaire de ladite forme prédéterminée et qui et espacée dudit outil d'un deuxième espace d'usinage par décharge électrique comparativement petit, pour produire ainsi un outil d'essai ayant une surface fonctionnelle dont la forme est complémentaire de celle de la deuxième électrode; et
l'outil d'essai ayant été utilisé pour produire une pièce d'essai, la pièce d'essai ayant été contrôlée et ladite forme prédéterminée ayant été changée si nécessaire, les étapes séquentielles additionnelles ci-dessous:
(c) exposition d'une deuxième ébauche d'outil à un usinage par décharge électrique comparativement rapide en utilisant ladite deuxième électrode, espacée de ladite ébauche d'outil d'un espace d'usinage par décharge électrique comparativement grand, pour produire ainsi un deuxième outil ayant une surface grossière dont la forme se rapproche de ladite forme prédéterminée; et
(d) exposition du deuxième outil à un usinage par décharge électrique comparativement lent en utilisant une troisième électrode avec une surface fonctionnelle dont la forme est complémentaire de ladite forme prédéterminée et espacée dudit outil d'un espace d'usinage par décharge électrique comparativement petit, pour produire ainsi un outil de production avec une surface fonctionnelle dont la forme est complémentaire de celle de la troisième électrode.

2. Procédé selon la revendication 1, dans lequel le grand espace d'usinage par décharge électrique correspond au moins à 0,5 mm, le petit espace d'usinage par décharge électrique étant inférieur à 0,5 mm.

3. Procédé selon les revendications 1 ou 2, dans lequel la première électrode a une polarité négative au cours de l'étape (a), la deuxième électrode ayant une polarité positive au cours de l'étape (b).

4. Procédé selon l'une quelconque des revendications précédentes, dans lequel la deuxième électrode a une polarité négative au cours de l'étape (c), la troisième électrode ayant une polarité positive au cours de l'étape (d).

5. Procédé selon l'une quelconque des revendications précédentes, dans lequel la première ébauche d'outil est composée d'un alliage de zinc.

6. Procédé selon l'une quelconque des revendications précédentes, dans lequel la deuxième ébauche d'outil est composée d'acier, d'un alliage de zinc ou d'un alliage d'aluminium.

7. Procédé selon l'une quelconque des revendications précédentes, dans lequel la première ébauche d'outil comprend une pièce coulée avec une surface dont la forme se rapproche de ladite forme prédéterminée.

8. Procédé selon la revendication 7, dans lequel la première ébauche d'outil est produite par un procédé comprenant la production d'un modèle de coulée par usinage d'un corps de mousse rigide pour former une surface usinée dont la forme se rapproche de ladite forme prédéterminée, la production d'un corps moulé sur la base du modèle de coulée et l'utilisation du corps moulé pour couler l'ébauche d'outil.

9. Procédé selon la revendication 8, englobant l'application sur la surface usinée d'un matériau coulant, p.ex. du plâtre de moulage, de la peinture ou une résine, se durcissant pour former un revêtement solide bloquant les pores de la surface usinée.

10. Procédé selon les revendications 8 ou 9, dans lequel le corps du modèle de coulée est produit par usinage à commande numérique (NC) utilisant des données numériques prédéterminées dérivées de ladite forme prédéterminée.

11. Procédé selon la revendication 10, dans lequel au moins une des électrodes est produite par usinage à commande numérique utilisant lesdites données numériques prédéterminées ou des données dérivées de celles-ci.

12. Procédé selon l'une quelconque des revendications 8 à 11, dans lequel la deuxième ébauche d'outil est produite par coulée en utilisant ledit modèle de coulée.

13. Procédé selon l'une quelconque des revendications précédentes, dans lequel les outils sont des outils moulés par injection.

14. Procédé selon l'une quelconque des revendications précédentes, dans lequel au moins une des électrodes est composée de graphite.

15. Procédé selon l'une quelconque des revendications précédentes, dans lequel la deuxième électrode est produite sur la base de données modifiées par rapport aux données utilisées pour produire la première électrode.

16. Procédé selon l'une quelconque des revendications précédentes, dans lequel la troisième électrode est produite sur la base de données modifiées par rapport aux données utilisées pour produire la deuxième électrode.
